# EUROPÄISCHE PATENTSCHRIFT

(11) **EP 3 613 627 B1**
(45) Veröffentlichungstag und Bekanntmachung des Hinweises auf die Patenterteilung: **25.05.2022**
(21) Anmeldenummer: 19185424.9
(22) Anmeldetag: 10.07.2019
(51) Int. Cl.: B60M 1/30

(54) **STROMSCHIENENSYSTEM**
BUSBAR SYSTEM
SYSTÈME DE RAIL CONDUCTEUR

(30) Priorität: 16.08.2018 DE 202018104720 U
(43) Veröffentlichungstag der Anmeldung: 26.02.2020
(73) Patentinhaber: REHAU Industries SE & Co. KG, 95111 Rehau (DE)
(72) Erfinder: Lautenschläger, Heike, 95706 Schirnding (DE); Deistler, Thomas, 95158 Kirchenlamitz (DE); Meinel, Udo, 95111 Rehau (DE)

(56) Entgegenhaltungen:
- WO-A1-00/56569
- WO-A1-2006/100267
- DE-U1-202012 101 576
- DE-U1-202017 101 189

## Beschreibung

Die Erfindung betrifft ein Stromschienensystem umfassend wenigstens eine Stromschiene, aufweisend ein Basisprofil mit einem Profilfuß, einem Profilkopf sowie einem, diese verbindenden, Profilsteg, wenigstens ein Abdeckelement sowie wenigstens einen Abstandshalter, wobei der Abstandshalter wenigstens ein Rastelement, eine Basis, wenigstens eine Haltevorrichtung sowie ein Klemmelement aufweist, wobei der Abstandshalter wenigstens eine Fixiervorrichtung aufweist, , wobei die Fixiervorrichtung über wenigstens ein Fixierelement mit der Haltevorrichtung des Abstandshalters in Wirkverbindung steht wobei das Fixierelement der Fixiervorrichtung an wenigstens einem Halteelement der Haltevorrichtung des Abstandshalters rastend hintergreift.

Derartige Stromschienensysteme sind im Stand der Technik bekannt.

So beschreibt beispielsweise die DE 7 018 332 (U) ein derartiges Stromschienensystem. Bei diesem Stromschienensystem ist der Abstandshalter als winkelförmiger Hohlkörper ausgebildet, mittels angeformter Nasen durch eine Drehung auf der Stromschiene selbstschließender Riegel ausgestaltet, auf die eine die Verriegelung fixierende Abdeckhaube aus Kunststoff sowie eine seitliche Abdeckplatte aus Kunststoff aufgerastet sind. Dabei soll die Abdeckhaube mittels angeformter Klemmansätze auf den an den Riegeln angeformten Nasen aufgerastet sein. Die Abstandshalter sind dabei als im Blasverfahren hergestellte Hohlkörper ausgebildet.

Weiterhin offenbart die DE 7 016 606 ein weiteres Stromschienensystem. Dieses Stromschienensystem für Stromschienen mit oberer Stromabnahmefläche weist Stromschienenabdeckungen sowie als Abstandshalter S-förmige selbstschließende Riegel aus Kunststoff auf, die den unteren Teil der hantelförmigen Stromschiene im verriegelten Zustand übergreifende Nase tragen und deren parallele und im verriegelten Zustand parallel zur Stromschiene verlaufenden Seiten mit Klemmnasen versehen sind, auf die seitliche Abdeckplatten aus Kunststoff mittels angeformter Klemmsätze aufgeklemmt sind.

In der DE 202017101189 U1 ist ein Stromschienensystem offenbart, umfassend eine von oben bestrichene Stromschiene, wenigstens ein Abdeckelement, sowie wenigstens einen Abstandshalter, wobei der Abstandshalter wenigstens ein Rastelement aufweist, welches mit wenigstens einem Klemmelement des Abdeckelements, diese verbindend, in Wirkverbindung steht, wobei wenigstens ein Trägerelement ein die Stromschiene überdeckendes, von dieser beabstandet angeordnetes, freies Ende aufweist, wobei das freie Ende des Trägerelements der Stromschiene gegenüberliegend angeordnet ist, dass der Abstandshalter durch wenigstens ein, über eine Traverse, mit wenigstens einem Halteelement verbundenes, Trägerelement gebildet ist, dass der Abstandshalter wenigstens eine Fixiervorrichtung aufweist, die wenigstens ein freies Ende des Abdeckelementes /oder die Stromschiene fixierend übergreift und die über wenigstens ein Fixierelement mit dem Abstandshalter in Wirkverbindung steht.

Die WO 00/56569 A1 beschreibt einen Stromschienenträger, der einen Trägerkörper zur elektrisch isolierten Aufnahme von zwei, seitlich bestrichenen, elektrisch leitfähigen Stromschienen mit jeweils wenigstens einer Kontakt-Schleiffläche aufweist, wobei die Stromschiene derart in dem Trägerkörper einsetzbar ist, dass die Kontakt- Schleiffläche parallel zur Längsachse des Trägerkörpers und in einem vorgebbaren Winkel zur Hochachse des Trägerkörpers angeordnet sind, dass die Stromschienen jeweils mit ihren Füßen in jeweils eine Nut des Trägerkörpers einsetzbar sind und die Stromschienen durch wenigstens ein von oben aufsteckbares Einrastelement in ihrer Betriebslage fixierbar sind. Um die Montage der Stromschienen im Trägerkörper zu vereinfachen, sind die Einrastelemente sowohl in ihrer oberen Endstellung als auch in ihrer unteren Endstellung einrastbar.

Diese Stromschienensysteme haben sich bereits über viele Jahre bewährt und weisen gegenüber Stromschienensystemen, bei denen die Abstandshalter sowie die Abdecksysteme aus Holz oder korrosionsanfälligen Werkstoffen hergestellt sind, entscheidende Vorteile auf.

Im Rahmen der weiteren Entwicklungen sind jedoch die Anforderungen an die Festigkeit der einzelnen Komponenten dieser Stromschienensysteme gestiegen, wobei gleichzeitig insbesondere die erforderlichen Montagezeiten sowie auch die Herstellungskosten reduziert werden müssen.

Bei modernen Stromschienensystemen müssen die einzelnen Komponenten so hergestellt bzw. konstruiert sein, dass sie multifunktional einsetzbar sind, dass die Montage zu allen Jahreszeiten und in allen Klimazonen einfach, schnell und ohne Verwechslungen realisierbar ist, dass die montierten Stromschienensysteme den langjährigen mechanischen, elektrischen sowie temperaturabhängigen Belastungen standhalten und jederzeit schnell sowie reversibel reparierbar bzw. austauschbar sind.

Hier setzt die Erfindung ein, die sich die Aufgabe gestellt hat, die Nachteile des bekannten Standes der Technik zu überwinden und ein Stromschienensystem aufzuzeigen, das kostengünstig und wirtschaftlich herstellbar ist, das eine kompakte Bauweise aufweist, das einfach, unverwechselbar sowie werkzeuglos montierbar bzw. demontierbar ist und einen sicheren sowie störungsfreien Dauerbetrieb ermöglicht.

Erfindungsgemäß wird diese Aufgabe durch die Merkmale des Anspruches 1 gelöst. Weitere vorteilhafte Ausgestaltungen der Erfindung sind in den Unteransprüchen beschrieben.

Es hat sich überraschend herausgestellt, dass ein Stromschienensystem, umfassend wenigstens eine Stromschiene, aufweisend ein Basisprofil mit einem Profilfuß, einem Profilkopf sowie einem, diese verbindenden, Profilsteg, wenigstens ein Abdeckelement sowie wenigstens einen Abstandshalter, wobei der Abstandshalter wenigstens ein Rastelement, eine Basis, wenigstens eine Haltevorrichtung sowie ein Klemmelement aufweist, wobei der Abstandshalter wenigstens eine Fixiervorrichtung aufweist, , wobei die Fixiervorrichtung über wenigstens ein Fixierelement mit der Haltevorrichtung des Abstandshalters in Wirkverbindung steht, wobei das Fixierelement der Fixiervorrichtung an wenigstens einem Halteelement der Haltevorrichtung des Abstandshalters rastend hintergreift, sich dadurch auszeichnet, dass die Fixiervorrichtung wenigstens ein freies Ende des Abdeckelements fixierend übergreift und über wenigstens einen Fixiersteg die Stromschiene fixierend hintergreift, dass das Klemmelement des Abstandshalters wenigstens teilweise mit dem Profilfuß sowie dem Profilkopf des Basisprofils der Stromschiene Wirkverbindung steht. Durch diese erfindungsgemäße Ausgestaltung ist es somit möglich, ein Stromschienensystem zur Verfügung zu stellen, dass eine sehr kompakte Bauweise aufweist, das sehr einfach sowie unverwechselbar montierbar bzw. demontierbar ist und bei dem die Montage der Abstandshalter sowie der Abdeckelemente unkompliziert und werkzeuglos erfolgt. Dieses erfindungsgemäße Stromschienensystem erlaubt weiterhin einen sicheren sowie störungsfreien Dauerbetrieb bei seiner bestimmungsgemäßen Verwendung. Hierdurch ist das erfindungsgemäße Stromschienensystem in seinem kompakt montierten Zustand stabilisiert, sodass bei bestimmungsgemäßer Verwendung des erfindungsgemäßen Stromschienensystems die Abdeckelemente, die sich über mehrere 100 m voneinander erstrecken, stabilisierend fixiert sind und so eine erhöhte mechanische bzw. thermische Beanspruchung durch das erfindungsgemäße Stromschienensystem problemlos meisterbar sind.

Das Stromschienensystem zeichnet sich weiter dadurch aus, dass wenigstens ein freies Ende des Fixiersteges der Fixiervorrichtung die Stromschiene fixierend hintergreift. Hierdurch ist eine sehr einfache, schnelle und vor allem werkzeuglose Montage des erfindungsgemäßen Stromschienensystems möglich, wobei auch mögliche reparaturbedingte Demontagen unkompliziert und ebenfalls werkzeuglos realisierbar sind.

Das Stromschienensystem ist weiterhin vorteilhafterweise so ausgebildet, dass die Haltevorrichtung über wenigstens ein Verstärkungselement vom Abstandshalter beabstandet angeordnet ist. Diese Ausgestaltung ermöglicht neben der kostengünstigen und wirtschaftlichen Herstellung insbesondere des Abstandshalters eine Stabilisierung bzw. Versteifung der Haltevorrichtung am Abstandshalter.

In einer vorteilhaften Ausführungsform ist das erfindungsgemäße Stromschienensystem so ausgebildet, dass die Fixiervorrichtung eine Basis mit wenigstens einem, daran angeordneten, Arretierungselement und wenigstens einen, an der Basis angeordneten, Fixiersteg aufweist. Durch diese vorteilhafte Ausgestaltung ist es möglich, das erfindungsgemäße Stromschienensystem so zu montieren, dass die Fixiervorrichtung immer an der richtigen Position angeordnet ist und das jeweilige Abdeckelement rastend hintergreift.

Es hat sich weiterhin als vorteilhaft herausgestellt, dass der Abstandshalter wenigstens eine, die Stromschiene wenigstens teilweise aufnehmende, Nut aufweist. Durch diese vorteilhafte Ausgestaltung können bei dem erfindungsgemäßen Stromschienensystem Stromschienen mit unterschiedlichen Geometrien über den Abstandshalter und die Abdeckelemente bzw. die Fixiervorrichtung montiert werden.

Ebenfalls vorteilhaft bei dem erfindungsgemäßen Stromschienensystem ist, dass die Haltevorrichtung in etwa einem spitzen Winkel zur Basis des Abstandshalters angeordnet ist. Durch diese vorteilhafte Ausgestaltung ist einerseits der Abstandshalter wirtschaftlich und kostengünstig herstellbar und weist gleichzeitig eine optimale mechanische Steifigkeit auf. Weiterhin ist es dadurch möglich, das Fixierelement schnell, unkompliziert und werkzeuglos so an der Haltevorrichtung anzuordnen, dass einerseits das Arretierelement die Abdeckung fixierend hintergreift und andererseits die Fixiervorrichtung über wenigstens einen Fixiersteg die Stromschienen rastend hintergreift.

In einer ebenfalls vorteilhaften Ausführungsform ist das erfindungsgemäße Stromschienensystem so ausgebildet, dass die Haltevorrichtung zwei, über ein Versteifungselement sowie ein Verbindungselement miteinander verbundene, Halteelemente aufweist. In dieser Ausgestaltung ist es bei dem erfindungsgemäßen Stromschienensystem möglich, dass sowohl Stromschienen unterschiedlicher Geometrie als auch verschieden ausgestaltete Fixiervorrichtungen zu einem erfindungsgemäßen Stromschienensystem montierbar bzw. demontierbar sind.

Ebenfalls vorteilhaft bei dem erfindungsgemäßen Stromschienensystem ist, dass das Verbindungselement der Haltevorrichtung wenigstens einen Haltesteg aufweist. Hierdurch lässt sich das erfindungsgemäße Stromschienensystem bei der Montage sehr genau positionieren und entsprechend werkzeuglos fixieren.

Weiterhin vorteilhaft bei dem erfindungsgemäßen Stromschienensystem wird gesehen, dass der Haltesteg der Haltevorrichtung in etwa parallel zur Wand der Traverse angeordnet ist. Durch diese vorteilhafte Ausgestaltung des erfindungsgemäßen Stromschienensystems ist es ebenfalls möglich, dieses bei seiner bestimmungsgemäßen Verwendung insbesondere durch die exakte Positionierung bzw. Führung der Fixiervorrichtung an der Haltevorrichtung des Abstandshalters werkzeuglos und mit einem geringen Kraftaufwand zu montieren bzw. wenn erforderlich auch zu demontieren.

Es hat sich weiterhin als vorteilhaft herausgestellt, dass ein freies Ende des Abdeckelementes die Basis des Abstandshalters rastend hintergreift. In dieser vorteilhaften Ausgestaltung des erfindungsgemäßen Stromschienensystems ist somit eine schnelle, unkomplizierte sowie werkzeuglose Montage möglich.

Dabei hat es sich weiterhin als sehr vorteilhaft herausgestellt, dass die Haltevorrichtung über wenigstens eine Traverse vom Abstandshalter beabstandet angeordnet ist. Hierdurch ist es vorteilhafterweise möglich, dass unterschiedliche dimensionierte Fixiervorrichtungen für unterschiedlich dimensionierte Stromschienen in dem erfindungsgemäßen Stromschienensystem variabel und werkzeuglos einsetzbar sind.

Weiterhin vorteilhaft ist, dass die Fixiervorrichtung zwei an der Basis einander gegenüberliegend angeordnete, Fixierstege aufweist. Das erfindungsgemäße Stromschienensystem lässt sich somit einfach, schnell und werkzeuglos montieren bzw. auch wenn erforderlich demontieren. Das erfindungsgemäße Stromschienensystem ist auch so ausgebildet, dass die Fixiervorrichtung zwei, einander gegenüberliegend, an den Fixierstegen angeordnete, Fixierelemente aufweist. Neben der einfachen Positionierung ist auch eine höhere Sicherheit des montierten, erfindungsgemäßen Stromschienensystems realisierbar.

In einer weiteren vorteilhaften Variante des erfindungsgemäßen Stromschienensystems sind die Fixierstege der Fixiervorrichtung in etwa einem spitzen Winkel zur Stromschiene angeordnet. Dadurch ist es vorteilhafterweise möglich, die Fixiervorrichtung vor der Montage exakt zu positionieren und nach der Montage die Stromschienen fixierend zu hintergreifen.

Das erfindungsgemäße Stromschienensystem ist vorteilhafterweise so ausgebildet, dass an wenigstens einem freien Ende des Fixiersteges wenigstens ein Ausgleichselement angeordnet ist. Durch diese vorteilhafte Ausgestaltung ist die Fixiervorrichtung an verschiedene Geometrien von Stromschienen sowie auch als Ausgleich für die Toleranzen von Stromschienen problemlos anpassbar, da das Ausgleichselement im Querschnitt etwa dreieckförmig ausgebildet ist. Weiterhin vorteilhaft ist, dass das Ausgleichselement der Fixiervorrichtung eine geringere Wandstärke aufweist als der Fixiersteg, hierdurch ist bei bestimmungsgemäßer Verwendung des erfindungsgemäßen Stromschienensystems das Ausgleichselement in seiner Ausdehnung abgearbeitet bzw. zusammengepresst, die jeweilige Stromschiene fixierend, angeordnet.

Es hat sich weiterhin als vorteilhaft herausgestellt, dass die Traverse im Querschnitt etwa dreieckförmig ausgebildet ist. Dies führt einerseits zur Stabilisierung des Abstandshalters des erfindungsgemäßen Stromschienensystems und andererseits zu einer optimalen geometrischen Ausgestaltung, Positionierung sowie Fixierung der Fixiervorrichtung.

In einer ebenfalls vorteilhaften Ausführungsform des erfindungsgemäßen Stromschienensystems weist der Abstandshalter wenigstens eine, den Profilfuß des Basisprofils der Stromschiene aufnehmende, Nut auf. In dieser vorteilhaften Ausführung ist der Abstandshalter werkzeuglos und unverwechselbar am Profilfuß der Stromschiene angeordnet und über das erste Rastelement fixierbar.

Weiterhin vorteilhaft ist, dass am Klemmelement des Abstandshalters wenigstens ein zweites Rastelement angeordnet ist. In dieser vorteilhaften Variante ist es möglich, dass ein entsprechend ausgebildetes freies Ende eines Abdeckelementes das zweite Rastelement des Abstandhalters rastend hintergreift.

Ein weiterer Vorteil des erfindungsgemäßen Stromschienensystems besteht darin, dass das Klemmelement des Abstandshalters vom Profilsteg des Basisprofils der Stromschiene beabstandet angeordnet ist. Hierdurch ist es vorteilhafterweise möglich, unterschiedlich dimensionierte Stromschienen mit dem erfindungsgemäßen Stromschienensystem zu montieren.

Ein weiterer Vorteil des erfindungsgemäßen Stromschienensystems besteht darin, dass der Abstandshalter an seiner dem Klemmelement gegenüberliegend angeordneten Seite wenigstens einen Schlitz aufweist. Durch diese vorteilhafte Ausgestaltung ist es einerseits möglich unterschiedlich dimensionierte Abdeckelemente am Abstandshalter werkzeuglos zu fixieren, sodass die jeweils landestypischen gesetzlichen Vorgaben mit diesem erfindungsgemäßen Stromschienensystem problemlos realisierbar sind.

Weiterhin vorteilhaft bei dem erfindungsgemäßen Stromschienensystem ist, dass der Abstandshalter ein an der Traverse angeordnetes Rastelement aufweist, welches so ausgebildet ist, dass ein Abdeckelement bei bestimmungsgemäßen Einsatz des erfindungsgemäßen Stromschienensystems mit einem freien Ende rastend hintergreift.

Weiterhin vorteilhaft bei dem erfindungsgemäßen Stromschienensystem ist das ein freies Ende des Abdeckelementes die Basis des Abstandshalters rastend hintergreift. Hierdurch ist eine einfache und werkzeuglose Montage des Abdeckelements bei dem erfindungsgemäßen Stromschienensystem möglich. Weiterhin erfolgt bei dem erfindungsgemäßen Stromschienensystem durch das Arretierelement der Fixiervorrichtung eine weitere, zusätzliche Fixierung des freien Endes des Abdeckelementes, sodass das erfindungsgemäße Stromschienensystem bei bestimmungsgemäßer Verwendung immer einen sicheren sowie störungsfreien Dauerbetrieb ermöglicht.

In einer ebenfalls vorteilhaften Ausführung des erfindungsgemäßen Stromschienensystems sind die Basis und / oder das Klemmelement und / oder die Traverse und / oder das Halteelement im Querschnitt etwa doppel-T-förmig ausgebildet. Durch diese geometrische Dimensionierung ist das erfindungsgemäße Stromschienensystem bei bestimmungsgemäßer Verwendung den Anforderungen an einen störungsfreien Dauerbetrieb hinsichtlich der Festigkeit sowie der Stabilisierung ausreichend dimensioniert bzw. entsprechend anpassbar.

Das erfindungsgemäße Stromschienensystem ist weiterhin vorteilhafterweise so ausgebildet, dass sowohl der Abstandshalter, das Fixierelement sowie das Abdeckelement als einfach dimensionierte Teile darstellbar bzw. herstellbar sind und somit kostengünstig und wirtschaftlich herstellbar sind. Weiterhin können sowohl der Abstandshalter und / oder das Fixierelement und / oder das Abdeckelement aus polymeren bzw. duromeren Materialien herstellbar sein.

Unter polymeren Materialien sind Materialien wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien gemeint.

Dabei können den polymeren Materialien geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen.

Weiterhin vorteilhaft bei dem erfindungsgemäßen Stromschienensystem ist, dass der Abstandshalter sowie die Fixiervorrichtung als Formteil im Spritzgießverfahren kostengünstig und wirtschaftlich herstellbar ist. Es liegt weiterhin im Rahmen der Erfindung, dass der Abstandshalter des erfindungsgemäßen Stromschienensystems als Profil ausgebildet und im Extrusions- bzw. Coextrusionsverfahren herstellbar ist.

Die Erfindung soll nun an diesen nicht einschränkenden Ausführungsbeispielen näher beschrieben werden.

Es zeigen:
- Fig. 1:: Vorderansicht eines erfindungsgemäßen Stromschienensystems;
- Fig. 2:: perspektivische Darstellung eines Abstandshalters des erfindungsgemäßen Stromschienensystems;
- Fig. 3:: perspektivische Darstellung einer Fixiervorrichtung des erfindungsgemäßen Stromschienensystems.

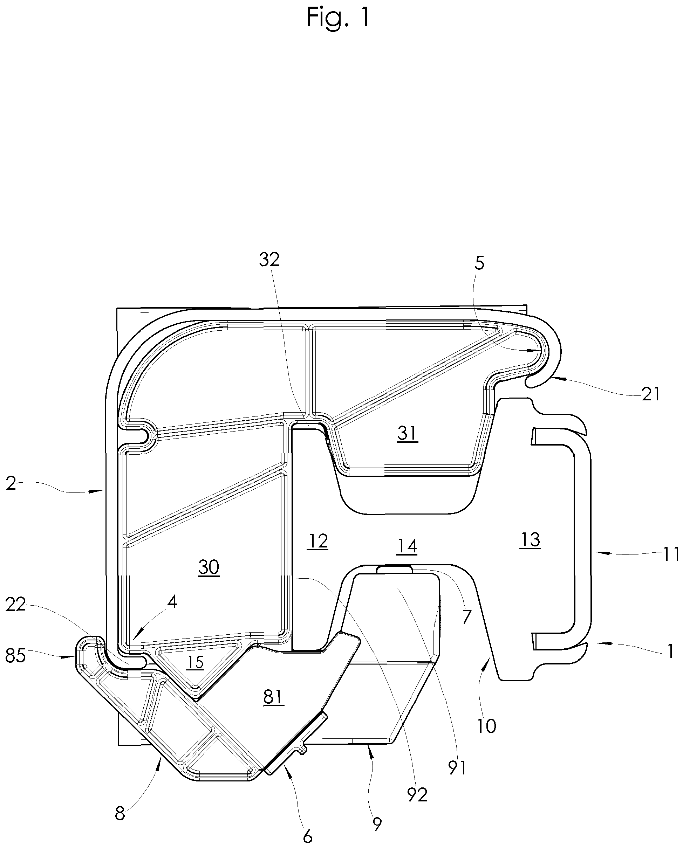

In der Fig. 1 ist eine Vorderansicht eines erfindungsgemäßen Stromschienensystems dargestellt.

Das Stromschienensystem umfasst wenigstens eine Stromschiene 1, wenigstens ein Abdeckelement 2 sowie einen Abstandshalter 3 und die Fixiervorrichtung 8. Die Stromschiene 1 ist so ausgebildet, dass sie ein Basisprofil 10 aufweist mit einem Profilfuß 12, einem Profilkopf 13 sowie einem diese verbindenden Profilsteg 14.

An der dem Profilfuß 12 des Basisprofils 10 gegenüberliegenden Seite der Stromschiene 1 ist ein Gleitflächenprofil 11 angeordnet, an dem ein hier nicht dargestellter Stromabnehmer einer elektrischen Bahn anordenbar ist. Der Abstandshalter 3 ist so ausgebildet, dass er wenigstens ein Rastelement 4, 5, eine Basis 30, wenigstens eine Haltevorrichtung 6 sowie ein Klemmelement 31 aufweist.

Weiterhin weist der Abstandshalter 3 wenigstens eine Fixiervorrichtung 8 auf, die wenigstens ein freies Ende 21, 22 des Abdeckelementes 2 fixierend übergreift.

Die Fixiervorrichtung 8 steht über wenigstens ein (nicht sichtbares) Fixierelement mit dem Abstandshalter 3 in Wirkverbindung. Am Abstandshalter 3 ist das Abdeckelement 2 angeordnet, wobei ein freies Ende 21 des Abdeckelementes 2 das Rastelement 5 des Abstandshalters 3 rastend umgreift.

Das freie Ende 22 des Abdeckelementes 2 umgreift das Rastelement 4 des Abstandshalters 3.

An der Basis 30 des Abstandshalters 3 ist die Haltevorrichtung 6 über die Traverse 15 beabstandet angeordnet.

Die Traverse 15 weist in diesem Ausführungsbeispiel einen etwa dreieckförmigen Querschnitt auf.

Die Fixiervorrichtung 8 ist so ausgebildet, dass sie wenigstens einen Fixiersteg 81, 82 aufweist, welcher die Stromschiene 1 fixierend hintergreift.

Die Fixiervorrichtung 8 ist weiterhin so ausgebildet, dass sie ein Arretierungselement 85 aufweist, welche zusätzlich das freie Ende 22 des Abdeckelementes 2 fixierend übergreift.

Der Abstandshalter 3 des Stromschienensystems weist eine die Stromschiene 1 wenigstens teilweise aufnehmende Nut 32 auf. In diesem Ausführungsbeispiel ist der Abstandshalter 3 des erfindungsgemäßen Stromschienensystems so ausgebildet, dass er eine, den Profilfuß 12 des Basisprofils 10 der Stromschiene 1 aufnehmende, Nut 32 aufweist.

Das Klemmelement 31 des Abstandshalters 3 steht mit dem Profilfuß 12 und dem Profilkopf 13 des Basisprofils 10 der Stromschiene 1 wenigstens teilweise in Wirkverbindung. In dieser Anordnung der Basis 30 des Abstandshalters 2 am Profilfuß 12 der Stromschiene 1 ist der Abstandshalter 3 an der Stromschiene 1 positioniert bzw. fixiert.

Die Stromschiene selbst ist an einer Befestigungsvorrichtung 9 fixiert angeordnet. In diesem Ausführungsbeispiel ist die Befestigungsvorrichtung 9 so ausgebildet, dass sie ein Aufnahmeelement 91 aufweist, auf dem der Profilsteg 14 des Basisprofils 10 der Stromschiene 1 über ein Dämpfungselement 7 beabstandet angeordnet ist.

Weiterhin weist die Befestigungsvorrichtung 9 eine den Profilfuß 12 des Basisprofils 10 der Stromschiene 1 aufnehmende Nut 92 auf.

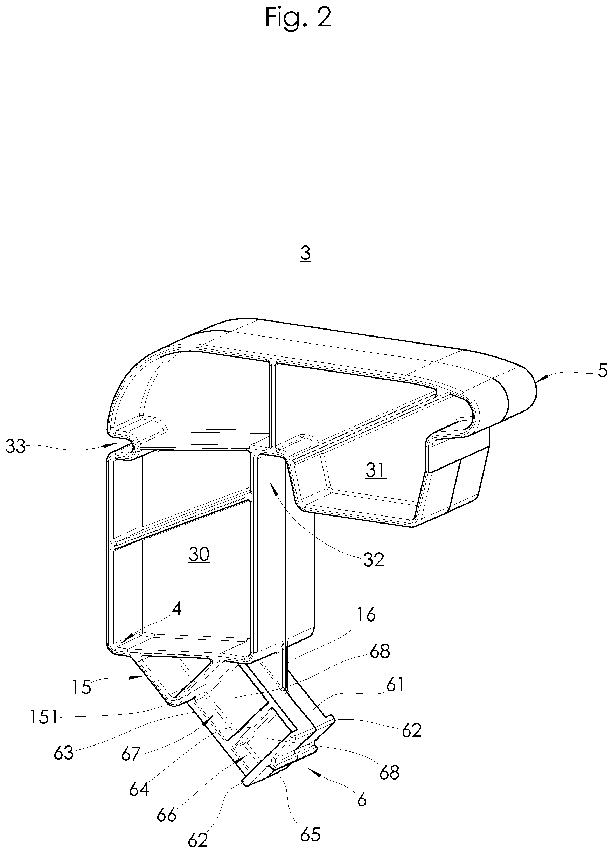

In der Fig. 2 ist eine perspektivische Darstellung eines Abstandshalters 3 des erfindungsgemäßen Stromschienensystems dargestellt.

Der Abstandshalter 3 weist eine Basis 30, ein Rastelement 4, 5, ein Klemmelement 31 sowie eine Nut 32 auf.

Das Klemmelement 31 ist über die Nut 32 von der Basis 30 des Abstandshalters 3 beabstandet angeordnet und weist an seiner der Basis 30 gegenüberliegenden Seite das zweite Rastelement 5 auf. An der Basis 30 des Abstandshalters 3 ist an dem der Nut 32 gegenüberliegenden Ende das erste Rastelement 4 angeordnet.

An der Basis 30 des Abstandshalters 3 ist die Traverse 15 angeordnet, welche im Querschnitt etwa dreieckförmig ausgebildet ist.

Die Haltevorrichtung 6 ist über die Traverse 15 von der Basis 30 des Abstandshalters 3 beabstandet angeordnet. Weiterhin ist die Haltevorrichtung 6 über das Verstärkungselement 16 von der Basis 30 des Abstandshalters 3 beabstandet angeordnet.

Die Haltevorrichtung 6 ist so ausgebildet, dass sie zwei, über ein Versteifungselement 64 sowie ein Verbindungselement 65 miteinander verbundene, Halteelemente 61, 62 aufweist. Das Verbindungselement 65 der Haltevorrichtung 6 weist dabei wenigstens einen Haltesteg 62 auf.

Der Haltesteg 62 der Haltevorrichtung 6 ist in etwa parallel zur Wand 151 der Traverse 15 angeordnet. Die Haltevorrichtung 6 ist weiterhin in etwa einem spitzen Winkel zur Basis 30 des Abstandshalters 3 angeordnet.

Die Haltevorrichtung 6 ist in diesem Ausführungsbeispiel so angeordnet, dass der Haltesteg 62 vom Versteifungselement 64 über eine durchgängige Öffnung 66 beabstandet ist. Weiterhin ist die Haltevorrichtung 6 so ausgebildet, dass ein Versteifungselement 64 von der Wand 151 der Traverse 15 über eine zweite Öffnung 67 beabstandet angeordnet ist.

Der Haltesteg 62 der Haltevorrichtung 6 ist so ausgebildet, dass er an seiner dem Versteifungselement 64 gegenüberliegend angeordneten Seite ein Verbindungselement 65 aufweist, welches die Haltevorrichtung 6 weiter stabilisiert.

Es liegt jedoch auch im Rahmen der Erfindung, dass das erste Halteelement 61 sowie das zweite Halteelement 63 über eine hier nicht dargestellte Wand miteinander und mit dem Versteifungselement 64 bzw. der Wand 151 der Traverse 15 und / oder über eine hier ebenfalls nicht dargestellte Wand mit dem Versteifungselement 64 und dem Haltesteg 62 verbunden sind. In dieser Ausgestaltung ist die erste Öffnung 66 und / oder die zweite Öffnung 67 der Haltevorrichtung 6 durch diese Wand, die Haltevorrichtung 6 versteifend, verschlossen.

Der Abstandshalter 3 ist weiterhin so ausgebildet, dass er an seiner dem Klemmelement 31 gegenüberliegend angeordneten Seite einen Schlitz 33 aufweist.

Der Schlitz 33 ist so dimensioniert, dass er ein hier nicht dargestelltes Abdeckelement welches am zweiten Rastelement 5 des Abstandshalters angeordnet, dieses umgreifend, im Schlitz 33 des Abstandshalters 3 fixierbar ist. Weiterhin im Rahmen der Erfindung, dass der Schlitz 33 so dimensioniert bzw. positioniert ist, dass er ein nicht dargestelltes Abdeckelement welches am ersten Rastelement 4 des Abstandshalters 3 angeordnet ist, dieses umgreifend, im Schlitz 33 des Abstandshalters 3 befestigbar ist.

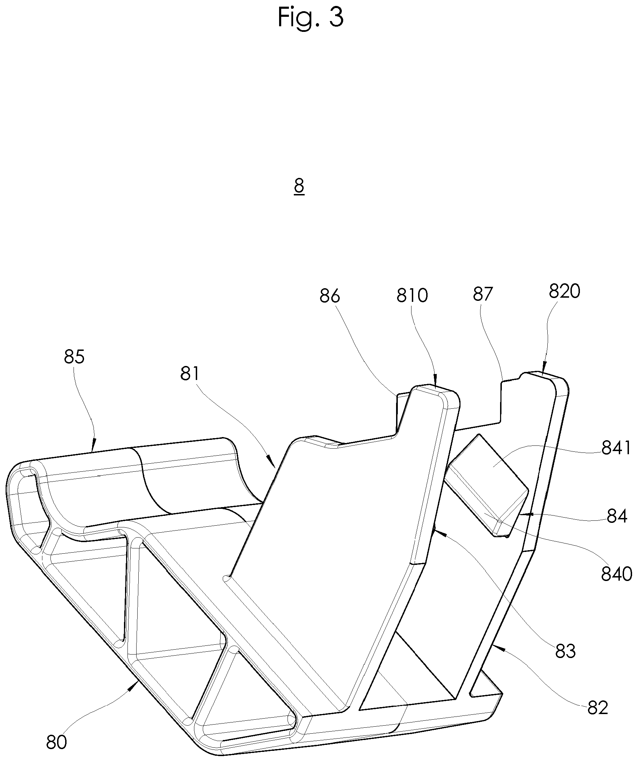

In der Fig. 3 ist eine perspektivische Darstellung der Fixiervorrichtung 8 des erfindungsgemäßen Stromschienensystems dargestellt.

Die Fixiervorrichtung 8 weist eine Basis mit wenigstens einem daran angeordneten Arretierelement 85 und wenigstens einen, an der Basis 80 angeordneten, Fixiersteg 81, 82 auf.

In diesem Ausführungsbeispiel ist die Fixiervorrichtung 8 des erfindungsgemäßen Stromschienensystems so ausgebildet, dass sie zwei an der Basis 80, einander gegenüberliegend angeordnete, Fixierstege 81, 82 aufweist.

Die Breite der Fixierstege 81, 82 der Fixiervorrichtung 8 ist so ausgewählt, dass sie in etwa dem Abstand zwischen dem Haltesteg 62 der Haltevorrichtung 6 sowie der Wand 151 der Traverse 15 entspricht.

Die Fixiervorrichtung 18 ist weiterhin so ausgebildet, dass sie zwei, einander gegenüberliegend, an den Fixierstegen 81, 82 angeordnete, Fixierelemente 83, 84 aufweist.

In diesem Ausführungsbeispiel sind die Fixierelemente 83, 84 so ausgebildet, dass sie eine Basis 840 aufweist, an deren freien Enden jeweils eine Anlaufschräge 841, 842 angeordnet ist. Die Fixiervorrichtung 8 des erfindungsgemäßen Stromschienensystems ist weiterhin so ausgebildet, dass die Fixierstege 81, 82 an ihrem der Basis 80 gegenüberliegenden freien Ende 810, 820 in etwa einem spitzen Winkel angeordnet sind.

Bei bestimmungsgemäßem Einsatz der Fixiervorrichtung 8 am erfindungsgemäßen Stromschienensystem ist die Fixiervorrichtung 8 so an der Haltevorrichtung 6 des Abstandshalters 3 angeordnet, dass das Fixierelement 83, 84 am zweiten Halteelement 63 der Haltevorrichtung 6 vorbeibewegt und am ersten Halteelement 61 der Haltevorrichtung 6 fixierend hintergreift.

Die Fixiervorrichtung 8 des erfindungsgemäßen Stromschienensystems ist vorteilhafterweise weiterhin so ausgebildet, dass bei bestimmungsgemäßer Verwendung über wenigstens einen Fixiersteg 81, 82 die Stromschiene 1 fixierend hintergreift.

Weiterhin ist die Fixiervorrichtung 8 des erfindungsgemäßen Stromschienensystems so ausgebildet, dass zumindest ein freies Ende 810, 820 des Fixiersteges 81, 82 die Stromschiene fixierend hintergreift.

Die Fixiervorrichtung 8 des erfindungsgemäßen Stromschienensystems ist vorteilhafterweise so ausgebildet, dass an wenigstens einem freien Ende 810,820 des Fixiersteges 81,82 wenigstens einen Ausgleichselement 86,87 angeordnet ist. Durch diese vorteilhafte Ausgestaltung ist die Fixiervorrichtung 8 an verschiedene Toleranzen von Stromschienen 1 problemlos anpassbar, da das Ausgleichselement 86,87 im Querschnitt etwa dreieckförmig ausgebildet ist. Weiterhin vorteilhaft ist, dass das Ausgleichselement 86,87 der Fixiervorrichtung 8 eine geringere Wandstärke als der Fixiersteg 81,82 aufweist.

## Patentansprüche

1. Stromschienensystem umfassend wenigstens eine Stromschiene (1), aufweisend ein Basisprofil (10) mit einem Profilfuß (12), einem Profilkopf (13) sowie einem, diese verbindenden, Profilsteg (14), wenigstens ein Abdeckelement (2) sowie wenigstens einen Abstandshalter (3), wobei der Abstandshalter (3) wenigstens ein Rastelement (4, 5), eine Basis (30), wenigstens ein Haltevorrichtung (6) sowie ein Klemmelement (31) aufweist, wobei der Abstandshalter (3) wenigstens eine Fixiervorrichtung (8) aufweist, wobei die Fixiervorrichtung (8) über wenigstens ein Fixierelement (83, 84) mit der Haltevorrichtung (6) des Abstandshalters (3) in Wirkverbindung steht, wobei das Fixierelement (83, 84) der Fixiervorrichtung (8) an wenigstens einem Halteelement (61, 62) der Haltevorrichtung (6) des Abstandshalters (3) rastend hintergreift, **dadurch gekennzeichnet, dass** die Fixiervorrichtung (8) wenigstens ein freies Ende (21, 22) des Abdeckelements (2) fixierend übergreift und über wenigstens einen Fixiersteg (81, 82) die Stromschiene (1) fixierend hintergreift, dass das Klemmelement (31) des Abstandshalters (3) wenigstens teilweise mit dem Profilfuß (12) sowie dem Profilkopf (13) des Basisprofils (10) der Stromschiene (1) in Wirkverbindung steht..

2. Stromschienensystem nach Anspruch 1, **dadurch gekennzeichnet, dass** wenigstens ein freies Ende (810, 820) des Fixiersteges (81,82) der Fixiervorrichtung (8) die Stromschiene (1) fixierend hintergreift.

3. Stromschienensystem nach einem der vorhergehenden Ansprüche, **dadurch gekennzeichnet, dass** die Haltevorrichtung (6) über wenigstens ein Verstärkungselement (16) vom Abstandshalter (3) beabstandet angeordnet ist.

4. Stromschienensystem nach einem der vorhergehenden Ansprüche, **dadurch gekennzeichnet, dass** die Fixiervorrichtung (8) eine Basis (80) mit wenigstens einem daran angeordneten Arretierelement (85) und wenigstens einen, an der Basis (80) angeordneten, Fixiersteg (81, 82) aufweist.

5. Stromschienensystem nach einem der vorhergehenden Ansprüche, **dadurch gekennzeichnet, dass** der Abstandshalter (3) wenigstens eine, die Stromschiene (1) wenigstens teilweise aufnehmende, Nut (32) aufweist.

6. Stromschienensystem nach einem der vorhergehenden Ansprüche, **dadurch gekennzeichnet, dass** die Haltevorrichtung (6) in etwa einem spitzen Winkel zur Basis (30) des Abstandshalters (3) angeordnet ist

7. Stromschienensystem nach einem der vorhergehenden Ansprüche, **dadurch gekennzeichnet, dass** die Haltevorrichtung (6) zwei, über ein Versteifungselement (64) sowie ein Verbindungselement (65) miteinander verbundene, Halteelemente (61,62) aufweist.

8. Stromschienensystem nach Anspruch 7, **dadurch gekennzeichnet, dass** das Verbindungselement (65) der Haltevorrichtung (6) wenigstens einen Haltesteg (62) aufweist.

9. Stromschienensystem nach einem der Ansprüche 7 bis 8, **dadurch gekennzeichnet, dass** der Haltesteg (62) der Haltevorrichtung (6) in etwa parallel zur Wand (151) der Traverse (15) angeordnet ist.

10. Stromschienensystem nach einem der vorhergehenden Ansprüche, **dadurch gekennzeichnet, dass** ein freies Ende (22) des Abdeckelements (2) die Basis (30) des Abstandshalters (3) rastend hintergreift.

11. Stromschienensystem nach einem der vorhergehenden Ansprüche, **dadurch gekennzeichnet, dass** der Abstandshalter (3) an seiner, dem Klemmelement (31) gegenüberliegend angeordneten, Seite wenigstens einen Schlitz (33) aufweist.

## Claims

1. Busbar system comprising at least one busbar (1), having a base profile (10) with a profile foot (12), a profile head (13) and a profile web (14) connecting them, at least one cover element (2) and at least one spacer (3), wherein the spacer (3) has at least one detent element (4, 5), a base (30), at least one holding device (6) and a clamping element (31), wherein the spacer (3) has at least one fixing device (8), wherein the fixing device (8) is operatively connected via at least one fixing element (83, 84) to the holding device (6) of the spacer (3), wherein the fixing element (83, 84) of the fixing device (8) engages with least at one holding element (61, 62) of the holding device (6) of the spacer (3) from behind in a latching manner, **characterised in that** the fixing device (8) fits over at least one free end (21, 22) of the cover element (2) in a fixing manner and engages the busbar (1) from behind via at least one fixing web (81, 82) in a fixing manner, and **in that** the clamping element (31) of the spacer (3) is operatively connected at least in part to the profile foot (12) and the profile head (13) of the base profile (10) of the busbar (1).

2. Busbar system according to claim 1, **characterised in that** at least one free end (810, 820) of the fixing web (81, 82) of the fixing device (8) engages the busbar (1) from behind in a fixing manner.

3. Busbar system according to one of the preceding claims, **characterised in that** the holding device (6) is arranged at a distance from the spacer (3) via at least one reinforcement element (16).

4. Busbar system according to one of the preceding claims, **characterised in that** the fixing device (8) has a base (80) with at least one locking element (85) arranged thereon and at least one fixing web (81, 82) arranged on the base (80).

5. Busbar system according to one of the preceding claims, **characterised in that** the spacer (3) has at least one groove (32) receiving the busbar (1) at least in part.

6. Busbar system according to one of the preceding claims, **characterised in that** the holding device (6) is arranged at an approximately acute angle to the base (30) of the spacer (3).

7. Busbar system according to one of the preceding claims, **characterised in that** the holding device (6) has two holding elements (61, 62), which are connected to one another via a stiffening element (64) and a connection element (65).

8. Busbar system according to claim 7, **characterised in that** the connection element (65) of the holding device (6) has at least one holding web (62).

9. Busbar system according to one of claims 7 to 8, **characterised in that** the holding web (62) of the holding device (6) is arranged approximately parallel to the wall (151) of the crossmember (15).

10. Busbar system according to one of the preceding claims, **characterised in that** a free end (22) of the cover element (2) engages the base (30) of the spacer (3) from behind in a latching manner.

11. Busbar system according to one of the preceding claims, **characterised in that** the spacer (3) has at least one slot (33) on its side arranged opposite the clamping element (31).

## Revendications

1. Système de barres conductrices comprenant au moins une barre conductrice (1), présentant un profil de base (10) avec une base de profil (12), une tête de profil (13) ainsi qu'une entretoise de profil (14), reliant ceux-ci, au moins un élément de recouvrement (2) ainsi qu'au moins un écarteur (3), dans lequel l'écarteur (3) présente au moins un élément d'enclenchement (4, 5), une base (30), au moins un dispositif de maintien (6) ainsi qu'un élément de serrage (31), dans lequel l'écarteur (3) présente au moins un dispositif de blocage (8), dans lequel le dispositif de blocage (8) coopère avec le dispositif de maintien (6) de l'écarteur (3) par l'intermédiaire d'au moins un élément de blocage (83, 84), dans lequel l'élément de blocage (83, 84) du dispositif de blocage (8) vient en prise par l'arrière avec enclenchement sur au moins un élément de maintien (61, 62) du dispositif de maintien (6) de l'écarteur (3), **caractérisé en ce que** le dispositif de blocage (8) surmonte de manière bloquante au moins une extrémité libre (21, 22) de l'élément de recouvrement (2) et vient en prise par l'arrière de manière bloquante avec la barre conductrice (1) par l'intermédiaire d'au moins une entretoise de blocage (81, 82), que l'élément de serrage (31) de l'écarteur (3) coopère au moins en partie avec la base de profil (12) et la tête de profil (13) du profil de base (10) de la barre conductrice (1).

2. Système de barres conductrices selon la revendication 1, **caractérisé en ce que** l'au moins une extrémité libre (810, 820) de l'entretoise de blocage (81, 82) du dispositif de blocage (8) vient en prise par l'arrière de manière bloquante avec la barre conductrice (1).

3. Système de barres conductrices selon l'une quelconque des revendications précédentes, **caractérisé en ce que** le dispositif de maintien (6) est disposé à distance de l'écarteur (3) par l'intermédiaire d'au moins un élément de renforcement (16).

4. Système de barres conductrices selon l'une quelconque des revendications précédentes, **caractérisé en ce que** le dispositif de blocage (8) présente une base (80) avec au moins un élément d'arrêt (85) disposé dessus et au moins une entretoise de blocage (81, 82) disposée sur la base (80).

5. Système de barres conductrices selon l'une quelconque des revendications précédentes, **caractérisé en ce que** l'écarteur (3) présente au moins une rainure (32) logeant au moins en partie la barre conductrice (1).

6. Système de barres conductrices selon l'une quelconque des revendications précédentes, **caractérisé en ce que** le dispositif de maintien (6) est disposé selon à peu près un angle aigu par rapport à la base (30) de l'écarteur (3).

7. Système de barres conductrices selon l'une quelconque des revendications précédentes, **caractérisé en ce que** le dispositif de maintien (6) présente deux éléments de maintien (61, 62) reliés l'un à l'autre par l'intermédiaire d'un élément de renfort (64) ainsi que d'un élément de liaison (65).

8. Système de barres conductrices selon la revendication 7, **caractérisé en ce que** l'élément de liaison (65) du dispositif de maintien (6) présente au moins une entretoise de maintien (62).

9. Système de barres conductrices selon l'une quelconque des revendications 7 à 8, **caractérisé en ce que** l'entretoise de maintien (62) du dispositif de maintien (6) est disposée à peu près de manière parallèle par rapport à la paroi (151) de la traverse (15).

10. Système de barres conductrices selon l'une quelconque des revendications précédentes, **caractérisé en ce qu'**une extrémité libre (22) de l'élément de recouvrement (2) vient en prise par l'arrière avec enclenchement avec la base (30) de l'écarteur (3).

11. Système de barres conductrices selon l'une quelconque des revendications précédentes, **caractérisé en ce que** l'écarteur (3) présente au moins une entaille (33) sur son côté disposé en vis-à-vis par rapport à l'élément de serrage (31).
